# EUROPÄISCHE PATENTSCHRIFT

(11) **EP 3 788 869 B1**
(45) Veröffentlichungstag und Bekanntmachung des Hinweises auf die Patenterteilung: **30.10.2024**
(21) Anmeldenummer: 20192424.8
(22) Anmeldetag: 24.08.2020
(51) Int. Cl.: A01G 13/02, B65D 65/40

(54) **TRANSLUZENTE WUCHSHÜLLE AUS WELLPAPPE**
TRANSLUCENT GROWTH PROTECTOR MADE FROM CORRUGATED CARDBOARD
ENVELOPPE TRANSLUCIDE DE CULTURE EN CARTON ONDULÉ

(30) Priorität: 05.09.2019 DE 202019104897 U
(43) Veröffentlichungstag der Anmeldung: 10.03.2021
(73) Patentinhaber: Fraidling, Hermann, 87724 Ottobeuren (DE); Lübeck, Georg, 87724 Ottobeuren (DE)
(72) Erfinder: Fraidling, Hermann, 87724 Ottobeuren (DE); Lübeck, Georg, 87724 Ottobeuren (DE)
(74) Vertreter: Charrier Rapp & Liebau

(56) Entgegenhaltungen:
- EP-A1- 3 146 835
- DE-A1- 102011 087 742
- DE-U1- 202006 011 559
- GB-A- 2 187 071
- US-B1- 8 597 455

## Beschreibung

Die Erfindung betrifft eine umweltverträgliche Wuchshülle aus transluzenter Wellpappe nach dem Oberbegriff des Anspruchs 1 und einen Wellpappenzuschnitt zur Herstellung dieser transluzenten Wuchshülle.

Wuchshüllen sind Einkleidungen von Setzlingen wie jungen Bäumen oder dergleichen, die insbesondere zum Schutz vor Wildfraß eingesetzt werden. Sie bestehen zumeist aus einem den Setzling umgebenden Mantel, der über eine Befestigungshilfe im Boden verankert sein kann. Darüber hinaus gewähren Wuchshüllen dem Setzling Halt und sorgen für einen besonders geraden Wuchs. Eingesetzt werden Wuchshüllen beispielsweise in Baumschulen für die Forstwirtschaft. Insbesondere in der Forstwirtschaft soll ein manuelles Entfernen der Wuchshüllen nach einer Zeitspanne nach Ausbringen des Setzlings mitsamt Wuchshüllen von z.B. 2 Jahren vermieden werden. Hierzu werden teils biologisch abbaubare Wuchshüllen verwendet.

Die DE10 2015 116 0800 A1 zeigt eine Wuchshülle aus biologisch abbaubarem Material aus einem von Ausnehmungen durchbrochenen Mantel aus einem biologisch abbaubaren Kunststoff. Biologisch abbaubarer Kunststoff weist gegenüber herkömmlichem Kunststoff hohe Materialkosten auf, hat gegenüber organischen Werkstoffen eine hohe Verfallsdauer und lässt sich nur bedingt recyclen. Die EP3146835 A1 offenbart den Oberbegriff von Anspruch 1, nämlich eine Wuchshülle für Pflanzen mit einem zweiseitig offenen, entlang einer Führungslinie sich erstreckenden Hüllkörper, insbesondere in Form eines Zylinders. Diese Wuchshülle besteht aus Pappe, sodass sie verrotten kann, ist aber nicht transluzent.

Es ist Aufgabe der Erfindung eine Alternative für eine umweltverträgliche, insb. biologisch abbaubare und/oder recyclingfähige Wuchshülle anzugeben, die kostengünstiger herstellbar ist, einfach aufgestellt werden kann und einen geringeren Ressourceneinsatz aufweist. Weiterhin soll nach einer definierten Zeit eine Verrottung eintreten oder das Material einem Wertstoffkreislauf zugeführt werden können. Unter einem anderen Aspekt der Erfindung ist es Aufgabe der Erfindung einen dafür geeigneten Rohling anzugeben, aus dem die Wuchshülle auf einfache Weise hergestellt werden kann.

Diese Aufgaben werden durch eine Wuchshülle mit den Merkmalen des Anspruchs 1 gelöst. Danach ist eine biologisch abbaubare Wuchshülle für Pflanzen angegeben, die einen zweiseitig offenen, sich entlang einer Führungslinie erstreckenden Hüllkörper aufweist. Der Hüllkörper ist erfindungsgemäß aus transluzenter Wellpappe gefertigt.

Unter Transluzenz ist eine zumindest teilweise Lichtdurchlässigkeit für Licht im sichtbaren Bereich zu verstehen. Die transluzente Wellpappe der erfindungsgemäßen Wuchshülle ist also zumindest teilweise für Licht im sichtbaren Bereich lichtdurchlässig, insbesondere in dem für das Wachstum von Pflanzen förderlichen grünen Spektralbereich. Soweit nachfolgend von "transparent" oder "Transparentpapier" gesprochen wird, wird darunter auch "transluzent" bzw. ein "transluzentes Papier" verstanden.

Unter Wellpappe ist ein Verbundkörper wenigstens zweier Papierschichten zu verstehen. Bei einer einseitig gedeckten Wellpappe ist eine erste gewellte Papierschicht (Wellschicht) auf eine plane Papierschicht (Deckschicht) aufgebracht (kaschiert). Bei einer zweiseitig gedeckten Wellpappe ist eine weitere plane Papierschicht (Deckschicht) auf der anderen Seite der Wellschicht aufgebracht ist. Mehrlagige bzw. mehrwellige Wellpappen weisen mehrere alternierend angeordnete Deck- und Wellschichten auf, die ein- oder zweiseitig gedeckt sein können. Deck- und Wellschichten können gleiche oder unterschiedliche Stärke (Grammatur) aufweisen.

Der Hüllkörper kann insbesondere ein Zylinder im mathematischen Sinne sein. Ein Zylinder ist jeder konstante sich entlang einer Führungslinie erstreckende Querschnitt. Es kann aber auch ein nicht konstanter Querschnitt Anwendung finden, z.B. ein Hüllkörper mit sich konisch nach oben erweiterndem Querschnitt.

Eine Wuchshülle aus transluzenter Wellpappe lässt eine kostengünstige Herstellung zu, wobei die Lichtdurchlässigkeit (Transluzenz) der Wellpappe insbesondere die Wuchsgeschwindigkeit der Pflanze positiv beeinflusst. Zusätzliche Ausnehmungen oder Löcher zur Schaffung von Lichteinfall, wie es insbesondere bei lichtundurchlässigem Material notwendig ist, ist bei transluzenter Wellpappe entbehrlich. Dadurch kann die Stabilität erhöht werden.

Weitere vorteilhafte Ausgestaltungen und Merkmale der Erfindung sind in den Unteransprüchen angegeben.

Die Wuchshülle kann vorteilhaft einwellig aus einer einseitig oder zweiseitig gedeckten Wellpappe aus verklebtem Transparentpapier bestehen. Eine einwellige, zweiseitig gedeckte Wellpappe (zwei Deckschichten mit dazwischen eingefasster Wellschicht) hat gegenüber einer einseitig gedeckten Wellpappe höhere Stabilität, ist aber aufwendiger in der Fertigung. Die Wellpappe kann auch mehrlagig bzw. mehrwellig mit einer Mehrzahl alternierend angeordneter Lagen von Wellschichten und Deckschichten ausgeführt sein.

Transparentpapier ist ein industriell verfügbarer, zumindest teilweise lichtdurchlässiger (transluzenter) Papierrohstoff, der in verschiedenen Ausprägungen wie z.B. Grammatur (g/m²) oder Fasergrößen und -zusammensetzung erhältlich ist. Transparentpapier ist, da es im Wesentlichen aus natürlichen Fasern (Holzfasern) hergestellt ist, sehr umweltverträglich, im Wesentlichen biologisch abbaubar und mit üblichen Recyclingverfahren zur Wiederverwertung von Papier recyclingfähig.

In einer vorteilhaften Ausführungsform weisen die Deckschicht und die Wellschicht der Wellpappe unterschiedliche Grammaturen (Flächengewicht in g/m²) auf. In Feldversuchen als überraschend widerstandsfähig hat sich dabei Wellpappe erwiesen, bei welcher die Deckschicht bzw. die mehreren Deckschichten etwa doppelt so stark sind wie die Wellschicht bzw. die mehreren Wellschichten ausgeführt ist bzw. sind. Als besonders vorteilhaft erwiesen hat sich Wellpappe mit folgenden Grammatur-Kombinationen von Wellschicht / Deckschicht (jeweils in g/m²): 40/80; 50/80 ; 40/90 ; 50/90 ; 60/90; 60/100; 60/110; 60/120.

Unter "etwa doppelt so stark" ist eine Abweichung des Flächengewichts der Wellschicht von nicht mehr als 20% gegenüber der Hälfte des Flächengewichts der Deckschicht zu verstehen.

Vorteilhaft ist die Wuchshülle einteilig aus einem den Hüllkörper bildenden Zuschnitt aus transluzenter Wellpappe gefertigt, welcher durch Falten oder Biegen in die gewünschte Form gebracht werden kann Dadurch kann die Zahl der Fertigungsschritte reduziert werden. Endseitige Längskanten bzw. -flächen der Wuchshülle sind vorteilhaft miteinander verklebt. Verklebung ist gegenüber anderen Verbindungsverfahren einfach und kostengünstig. Andere Formen der Verbindung der Längskanten -bzw. -flächen, wie z.B. Verklammerung oder Vernähen oder auch lösbare Verbindungen, wie z.B. Verlaschung oder Verklettung mittels Klettverschlüsse, sind ebenfalls möglich. Die Verbindung der Längskanten bzw. -flächen kann bereits unmittelbar bei Herstellung des Zuschnitts erfolgen, so dass zum Ausbringen der Wuchshülle außer dem Entfalten keine weiteren Arbeitsschritte vor Ort mehr notwendig sind.

Zusätzlich oder alternativ können auch über die Höhe der Wuchshülle Aufreißlaschen oder Trennperforationen zum einfachen und schnellen Einholen der Wuchshüllen nach dem Ausbringen vorgesehen sein. Dies ist z.B. dann zweckmäßig, wenn die Wuchshüllen nach bestimmungsgemäßem Gebrauch nicht verrotten, sondern möglichst schnell einem Wertstoffkreislauf (Recycling) zugeführt werden sollen.

In einer vorteilhaften Ausprägung weist eine Hüllfläche der Wuchshülle eine Lichtdurchlässigkeit von mindestens 35% im Spektralbereich von 450nm bis 550nm und/oder eine Lichtdurchlässigkeit von mindestens 35% im Spektralbereich von 600nm bis 650nm auf. Die Lichtdurchlässigkeit in den angegebenen Lichtspektren ist für die Photosynthese und damit das Pflanzenwachstum besonders geeignet. Die Lichtdurchlässigkeit in den angegebenen Spektralbereichen kann durch Wahl des verwendeten Transparentpapiers und/oder die Art der Wellpappe (Anzahl und Grammatur von Well- und Deckschichten, Wellenhöhe, Zuschlagsstoffe etc.) vorteilhaft eingestellt werden.

Unter Lichtdurchlässigkeit der Hüllfläche ist die Lichtdurchlässigkeit einer Wand des Hüllkörpers mit einer gewissen Wand- bzw. Mantelstärke zu verstehen. Im Falle einer mehrlagigen Wand ist unter Lichtdurchlässigkeit die Lichtdurchlässigkeit aller Wandlagen zu verstehen.

Bevorzugt kann mindestens ein Transparentpapier der Wellpappe der Wuchshülle eine Wasseraufnahmefähigkeit von COBB 1800s zwischen 50 und 400g/m² aufweisen. Alternativ oder gleichzeitig kann das Transparentpapier der Wuchshülle eine Wasseraufnahmefähigkeit von COBB 30s kleiner als 50g/m² aufweisen. Durch eine niedrige Wasseraufnahmefähigkeit kann die Witterungsbeständigkeit der Wuchshülle verbessert und insbesondere eine ausreichende Standzeit der Wuchshülle für einen Zeitraum von z.B. 2 oder 3 Jahren erreicht werden. Andererseits stellt eine gewisse Wasseraufnahmefähigkeit eine vollständige Verrottung nach einer ausreichenden Standzeit sicher. Die Standzeit der Wuchshülle kann damit durch die Einstellung der Wasseraufnahmefähigkeit vorgegeben werden. Durch eine gewisse Wasseraufnahmefähigkeit kann gleichzeitig auch eine sichere Verklebung erreicht werden.

Unter COBB ist das Ergebnis eines nach DIN EN 20535 definierte Cobb-Verfahrens (in aktueller Fassung) mit den o.g. Parametern zur Bestimmung des Wasserabsorptionsvermögens zu verstehen.

In einer vorteilhaften Ausprägung ist der Hüllkörper im Wesentlichen gasdurchlässig, insbesondere gasdurchlässig mit einer Wasserdampfdurchlässigkeit von 350g/m² und Tag, ausgebildet. Durch eine hohe Gasdurchlässigkeit kann ein schädliches Mikroklima im Inneren der Wuchshülle infolge sich stauender Nässe vermieden werden.

In einer vorteilhaften Ausführung ist mindestens ein Transparentpapier der Wellpappe beschichtet, insbesondere mit einem Lack. Als Lack kann bspw. ein wasserfester und/oder bedruckbarer Lack verwendet werden. Durch eine wasserfeste Beschichtung steigt die Widerstandsfähigkeit der Wellpappe gegenüber Witterungseinflüssen, insbesondere Feuchtigkeit und Kälte, so dass die Standzeit erhöht werden kann. Vorteilhaft ist der Lack transparent oder transluzent.

Bevorzugt ist nur die Wetterseite der Wuchshülle, also die Außenseite der am weitesten außenliegenden Lage des Transparentpapiers, mit einer wasserabweisenden Schicht beschichtet (hydrophobiert). Auf diese Weise kann eine gewünschte Minimalstandzeit bei anschließend hoher Zerfalls- bzw. Verrottungsrate erreicht werden. Die Wellpappe kann aber auch anderweitig wasserresistent oder hydrophob gemacht werden, z.B. durch entsprechende Zuschlagsstoffe bei der Herstellung des Transparentpapiers.

In einer weiteren vorteilhaften Ausführungsform weist die Wuchshülle wasserresistent ausgeführte End- bzw. Begrenzungsflächen auf. Unter End- bzw. Begrenzungsflächen ist der obere oder untere Abschluss des Hüllkörpers, insbesondere also die Aufstandsfläche der Wuchshülle bei Aufstellen auf den Boden, zu verstehen. Die End- bzw. Begrenzungsflächen sind in besonderem Maße Witterungseinflüssen wie Regen (von oben) und Nässe (aus dem Boden, von unten) ausgesetzt. Durch wasserresistente End- bzw. Begrenzungsflächen kann ein direkter Wassereintritt über die End- bzw. Begrenzungsflächen in die Wuchshülle weitestgehend unterbunden und damit die Wahrscheinlichkeit vorzeitiger Verrottung vermindert werden.

Die End- bzw. Begrenzungsflächen können offene Schnittkanten eines zur Wuchshülle verarbeiteten Wellpappenzuschnitts sein. In diesem Fall können diese offenen Schnittkanten vorteilhaft durch eine Verklebung oder dergleichen versiegelt sein. Um offene Schnittkanten an den End- bzw. Begrenzungsflächen zu vermeiden, können die End- bzw. Begrenzungsflächen auch durch geschlossene Falzkanten, d.h. in Form umgeschlagener Enden, ausgebildet sein.

In einer vorteilhaften Ausführungsform weist der Hüllkörper formwahrende Versteifungsmittel auf. Diese können beispielsweise durch Ein- bzw. Umschlagen von Eckbereichen oder durch um- bzw. eingestülpte Wandelemente gebildet werden bzw. sein. Dadurch erhält die Wuchshülle höhere Steifigkeit.

Vorzugsweise weist der Hüllkörper erste Befestigungsmittel in Form von Durchstecköffnungen zur Aufnahme von Befestigungsstangen auf. Dadurch kann die Wuchshülle auf einfache Weise im Boden verankert werden.

Durchstecköffnungen können beispielsweise als nach außen oder innen in die Horizontale geklappte Laschen zur Aufnahme einer Befestigungsstange ausgebildet sein. Die Laschen sind dabei als u-förmige in die Wellpappe eingebrachte Einschnitte mit einer zusätzlichen Ausnehmung (Durchstecköffnung) ausgeformt. Die Befestigungsstangen können durch die Ausnehmung (Durchstecköffnung) einer oder mehrerer solcher Laschen geführt sein.

Durchstecköffnungen können aber auch durch Einstülpungen eines freigestellten Wandelements bzw. Wandabschnitts, insbesondere in Kantenbereichen des Hüllkörpers, gebildet sein.

Durchstecköffnungen können auf diese Weise ohne zusätzliche Bauteile oder Materialaufwand eingebracht werden. Außerdem können entfaltbare Durchstecköffnungen z.B. für Transportzwecke raumsparend eingeklappt sein.

Zweckmäßigerweise können als Einstülpungen ausgebildete Laschen (Durchstecköffnungen für Befestigungsmittel wie Holzstäbe und dgl.) formschlüssig in dazu korrespondierende Fenster oder Durchstecköffnungen in der Wuchshülle bzw. des Zuschnitts eingreifen. Hierdurch kann die Verbindung der Längs-Kanten des Zuschnitts der Wuchshülle auf einfache Art und Weise redundant ausgeführt werden. Durch diese Formschlusskomponenten ist es auch möglich, das Anforderungsprofil an stoffschlüssige Verbindungen im Kantenbereich/ Randbereich des Zuschnitts zu erfüllen und damit den Klebstoffeinsatz zu reduzieren.

In einer vorteilhaften Ausführungsform sind die ersten in Form von Durchstecköffnungen gebildete Befestigungsmittel weiterhin mit Freischnitten versehen. Dadurch kann die visuelle Erkennbarkeit der Durchstecköffnungen für das Aufklappen bzw. Entfalten der Befestigungsmittel verbessert werden.

In einer vorteilhaften Ausführungsform kann die Wuchshülle bestimmte Tierarten anziehende oder abschreckende visuelle Farbkennzeichen oder olfaktorische Duftkennzeichen aufweisen. Beispielsweise können eine grelle Farbgebung der Wuchshülle oder Duftkennzeichen insbesondere gegen großgewachsene Fressfeinde wie z.B. Wildschweinen (denen gegenüber die Schutzhülle keinen ausreichenden mechanischen Schutz bietet, da Fressfeinde die Schutzhülle mühelos zerbeißen oder durchtrennen können) einen verbesserten Schutz bieten. Beispielsweise haben sich gegenüber Wildschweinen Duft- bzw. Vergrämungsmittel wie Hukinol oder Chilibeize als überraschend wirksam erwiesen. Gegenüber parasitären Insekten wie Raupen können die Raupen abschreckende Duftstoffe oder die Fressfeinde der Raupen anlockende Duftstoffe wie z.B. Pheromone in der Wuchshülle verarbeitet werden. Duftkennzeichen können dabei im Transparentpapier, im Klebstoff der Wellpappe, in einem Überzug (Lack) oder anderweitig in der Wellpappe ge- oder mit der Wellpappe verbunden sein.

Fernerhin weist eine vorteilhafte Ausgestaltung der Wuchshülle Aussparungen zur Tierflucht auf, wobei mindestens eine Aussparung die Größe einer Fläche eines Kreises mit einem Durchmesser von 30mm entspricht. Die Aussparungen sind vorteilhaft an der Unterseite bzw. in Bodennähe der Wuchshülle angebracht. Durch die Aussparungen können in die Wuchshülle verirrte Tiere, z.B. vom Rand der Wuchshülle in die Wuchshülle hineingefallene Jungvögel und Insekten, die Wuchshülle verlassen. Es können mehrere Aussparungen in verschiedenen Höhen und in verschiedenen Größen angebracht sein.

Die Wuchshülle kann außerdem weitere Aussparungen zur Belüftung aufweisen.

Vorteilhaft überschreitet die Summe der Flächen aller Aussparungen zur Tierflucht und Belüftung 10%, besonders bevorzugt 5%, der Mantelfläche bzw. Hüllfläche nicht. Durch die geringe Fläche an Aussparungen können mechanische Stabilität und Witterungsbeständigkeit der Wuchshülle beibehalten werden.

In einer vorteilhaften Ausführungsform ist der Hüllkörper im Wesentlichen mit einem kreiszylindrischen oder elliptischen Querschnitt ausgeführt. Durch die runde Formgebung kann der Materialeinsatz gegenüber anderen Formen gesenkt werden. Eine Wuchshülle mit kreiszylindrischem oder elliptischem Querschnitt ist vorzugsweise mit wenigstens zwei gegenüberliegenden Befestigungsstangen befestigt. Dadurch kann die Querschnittsform trotz einer geringen formwahrenden Eigenstabilität der Wuchshülle beibehalten werden.

In einer anderen vorteilhaften Ausführungsform weist die Wuchshülle im Wesentlichen einen Zylinder mit quadratischen Querschnitt auf. Quadratische Querschnittsformen weisen gegenüber anderen Querschnittsformen eine hohe Steifigkeit auf.

Besonders vorteilhaft ist die Wuchshülle faltbar ausgeführt. Dadurch kann die Wuchshülle in gefaltetem, i.e. platzsparendem, Zustand transportiert und erst am Aufstellungsort raumgreifend entfaltet werden.

Vorteilhaft weist die Wuchshülle weiterhin zweite Befestigungsmittel auf zur Verbindung von Wuchshülle und Befestigungsstangen, wobei die Befestigungsmittel als Kontaktklebeelemente ausgeführt sind.

Durch Kontaktklebeelemente, beispielsweise in Form eines von einem auf der Wuchshülle befindlichen Klebestreifens, der zum Schutz des Klebestreifens vor Verunreinigung eine vor Verbindung abziehbaren Folienstreifen aufweist, kann eine sicherere stoffschlüssige Verbindung zwischen Befestigungsstange und Wuchshülle erreicht werden. Andere Klebeverbindungen sind denkbar.

In einer vorteilhaften Ausführungsform ist die Wellpappe der Wuchshülle mit einer im Wesentlichen quer zur Führungslinie verlaufenden Verrippung (Querverrippung) ausgeführt. Querverrippung bedeutet, dass Wellentäler und Wellenberge der Wellschicht der Wellpappe in Richtung der Führungslinie gesehen, alternierend angeordnet sind. Durch eine Querverrippung kann die Witterungsbeständigkeit, insbesondere die Wasserresistenz der Wuchshülle, und damit die Standzeit, gegenüber Wuchshüllen mit Längsverrippung gesteigert werden.

In einer weiteren vorteilhaften Ausführungsform weist eine Deckschicht der Wellpappe eine Auftragsmenge von Klebstoff von maximal 20 g/m² nass bzw. 7 g/m² trocken auf. Dadurch kann eine ausreichende Verbindung der Deck- mit einer Wellschicht der Wellpappe bei gleichzeitig geringem Klebstoffeinsatz erreicht werden. Nasse Auftragsmenge bezieht sich dabei auf den Auftrag während der Herstellung der Wuchshülle bzw. der Wellpappe für die Wuchshülle, trockene Auftragsmenge bezieht sich auf die Klebstoffmenge nach Aushärtung bzw. Trocknung des Klebstoffs. Unter Klebstoff ist an dieser Stelle insbesondere die zur Verklebung von Welle und Deckschicht notwendige Kaschierschicht aus Klebstoff zu verstehen. Als Kaschierklebstoff sind z.B. wasserfeste, stärkebasierte Klebstoffe verwendbar. Andere Klebstoffe sind möglich.

In einer weiteren vorteilhaften Ausführungsform umfasst die Wuchshülle eine erste Klebstoffart und eine zweite Klebstoffart. Insbesondere kann für die Verbindung einer Deckschicht mit einer Wellschicht eine erster Klebstoffart, z.B. wasserfester Kaschierleim bzw. -klebstoff, Anwendung finden. Insbesondere kann für die Verbindung von längsseitigen Enden bzw. Kanten der zu einer Wuchshülle geformten Wellpappe eine zweite Klebstoffart, z.B. wasserfester Dispersionsleim, Anwendung finden. Durch die unterschiedlichen Klebstoffarten kann ein dem Anforderungsprofil jeder Klebeverbindung passender Klebeverbindung erzielt werden.

Um ein falsches Aufstellen der Wuchshülle zu verhindern, kann die Wuchshülle symmetrisch ausgebildet sein, d.h. dass alle Merkmale spiegelbildlich je an Ober- und Unterseite der Wuchshülle vorhanden sind. So kann sich beispielsweise stets eine Aussparung zur Tierflucht auf der Unterseite der Wuchshülle befinden und die Oberseite der Wuchshülle wasserresistent ausgeführt sein, unabhängig davon in welcher Ausrichtung die Wuchshülle aufgestellt wird.

In einer Ausführungsform kann die Wuchshülle aus zwei oder mehr übereinanderliegenden Lagen von Wellpappe ausgebildet sein. Für eine zweilagige Wuchshülle kann eine Länge des Zuschnitts z.B. ca. doppelt so lang ausgeführt sein wie der Umfang der Wuchshülle. Dadurch kann eine erhöhte Eigenstabilität der Wuchshülle erreicht werden.

Bevorzugt ist die Wellpappe für die Wuchshülle als eine zweilagig und einseitig gedeckte Wellpappe ausgebildet und umfasst eine erste äußere Deckschicht, eine Wellschicht, eine zweite Deckschicht und eine zweite, innere Wellschicht,. Zwei Wellschichten sorgen für eine gute Stabilität, während durch die äußere Deckschicht eine glatte Außenhaut mit wenig Angriffsfläche für Witterungsverhältnisse erzielt werden kann.

Die Erfindung betrifft ebenfalls einen Wellpappenzuschnitt für eine Wuchshülle mit einer der vorhergehenden Merkmale bzw. Merkmalskombinationen.

Weitere Ausgestaltungen und Merkmale ergeben sich aus der Figurenbeschreibung. Die Figurenbeschreibung bezieht sich gleichermaßen auf eine erfindungsgemäße Wuchshülle wie auch einen erfindungsgemäßen Wellpappenzuschnitt.

Dabei zeigen
- **Fig. 1A**: eine erfindungsgemäße Wuchshülle mit quadratischer Querschnittsform in einer ersten perspektivischen Ansicht (erstes Ausführungsbeispiel);
- **Fig. 1B**: eine erfindungsgemäße Wuchshülle mit quadratischer Querschnittsform nach Fig. 1A in einer weiteren perspektivischen Ansicht;
- **Fig. 2**: eine erfindungsgemäße Wuchshülle mit spitz-elliptischer Querschnittsform in einer perspektivischen Ansicht (zweites Ausführungsbeispiel);
- **Fig. 3**: eine erfindungsgemäße Wuchshülle mit spitz-elliptischer Querschnittsform in einer perspektivischen Ansicht (drittes Ausführungsbeispiel);
- **Fig. 4**: einen Wellpappen-Zuschnitt für eine Wuchshülle nach dem ersten Ausführungsbeispiel;
- **Fig. 5**: einen Wellpappen-Zuschnitt für eine Abwandlung der Wuchshülle nach dem ersten Ausführungsbeispiel und
- **Fig. 6**: einen Wellpappen-Zuschnitt der Wuchshülle nach dem zweiten Ausführungsbeispiel.
- **Fig. 7**: einen Wellpappen-Zuschnitt einer Wuchshülle nach einem vierten Ausführungsbeispiel
- **Fig. 8a, b**: eine erfindungsgemäße Wuchshülle nach dem vierten Ausführungsbeispiel in perspektivischen Ansichten
- **Fig. 9**: einen Querschnitt durch eine Wellpappe für eine Wuchshülle in einer bevorzugten Ausführungsvariante.

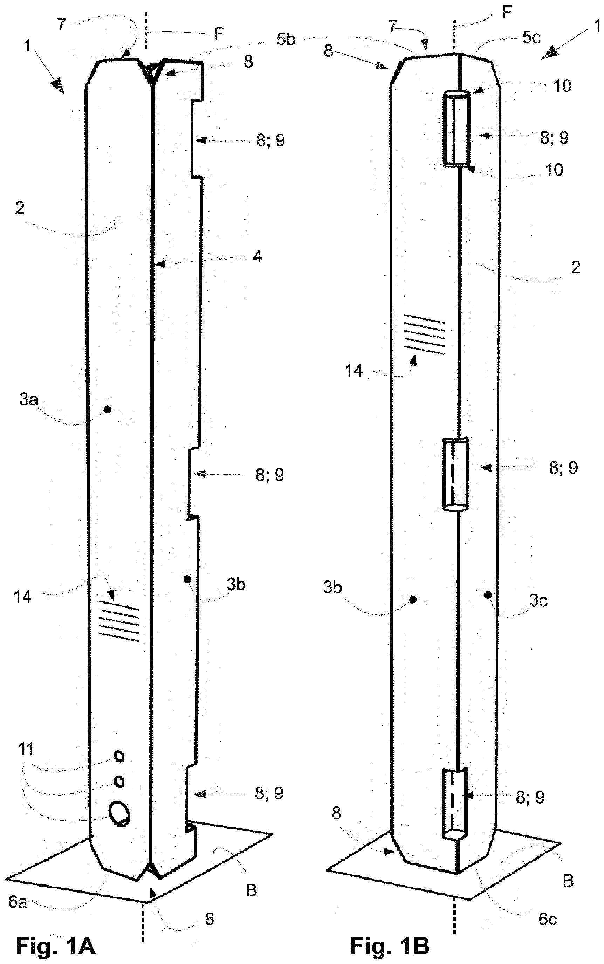

Die Figuren 1A und 1B zeigen ein erstes Ausführungsbeispiel einer erfindungsgemäßen Wuchshülle 1: Die Wuchshülle 1 ist aus einer transparenten Wellpappe gebildet und weist einen im Wesentlichen quadratischen Querschnitt auf, der sich entlang einer geraden Führungslinie F über eine Höhe von ca. 150cm erstreckt. Die Wuchshülle ist aus einem vier Seitenflächen 3a bis 3d umfassenden Wellpappenzuschnitt 20a gefaltet, wobei in Umfangsrichtung übereinanderliegende Enden bzw. Längskanten 4a, 4b des Wellpappenzuschnitts 20a übereinandergelegt und miteinander verklebt sind, so dass ein oben und unten offener Hüllkörper 2 entsteht. Der Hüllkörper 2 kann z.B. einen aus dem Boden B sprießenden Setzling umschließen.

Die Wellpappe ist zweiseitig gedeckt ausgeführt, wobei obere und untere Deckschicht sowie die davon eingefasste Wellschicht jeweils aus einem Transparentpapier mit 50g/m² Flächengewicht bestehen. Anstelle einer zweiseitigen Wellpappe könnte jedoch auch einseitig gedeckte Wellpappe mit höherem Flächengewicht, z.B. mit 90g/m² für Deck- und Wellschicht verwendet werden. Die Wellpappe ist derart behandelt, dass sie unter Berücksichtigung der im Einsatzgebiet vorherrschenden Witterungsverhältnissen eine Standzeit von z.B. 2,5 Jahren hat. Die Standzeit wird dabei maßgeblich über die Wasseraufnahmefähigkeit bestimmt, die wiederum maßgeblich über die Menge des in der Wellpappe verwendeten Klebstoffes bzw. Kaschierleims und eine entsprechende Lackschicht eingestellt ist.

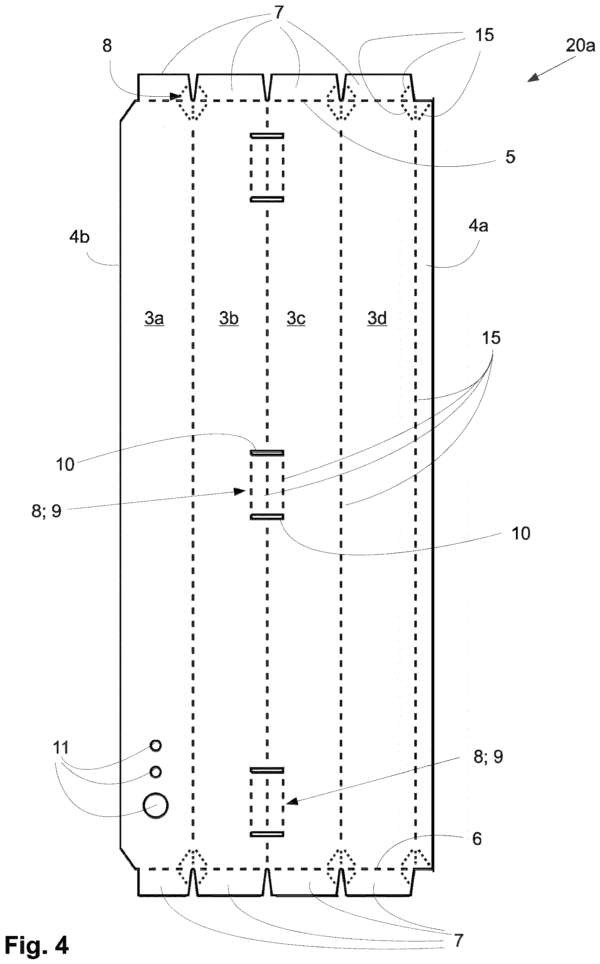

Durch die eckige Querschnittsform erhält die Wuchshülle 1 eine gewisse Grundfestigkeit. Die Wuchshülle ist weiter versteift durch an oberen und unteren Begrenzungsflächen 5 bzw. 6 eingeschlagene Ecken 7. Wie insbesondere aus Fig. 4 ersichtlich, können die einzuschlagenden Ecken 7 im Wellpappenzuschnitt für eine einfache Faltbarkeit mit Falzmarken 15 vorgeprägt sein.

Die für Witterungseinflüsse anfälligen Ober- und Unterkanten der 5 bzw. 6 sind durch die Umfalzungen von Umschlag-Enden 7 gebildet, so dass die Ober- und Unterkanten 5 bzw. 6 gegenüber Wassereintritt im Wesentlichen verschlossen sind. Die Umschlagenden 7 sind dabei als endseitiger Materialüberschuss über die eigentliche Höhe der Wuchshülle 1 gebildet, vgl. Fig. 4. Die Umschlagenden 7 sind dabei auf die Innenseite der Wuchshülle eingefaltet und mit der jeweils entsprechenden Seitenfläche 3a-d verklebt.

Die Verrippung der Wellpappe ist derart gewählt, dass die Wellen entlang der Führungslinie F von oben nach unten alternierend angeordnet sind. In Bezug auf die Führungslinie ist die Wuchshülle daher querverrippt bzw. bildet eine Querverrippung 14 aus. In Umfangsrichtung ist die Wuchshülle 1 dagegen längsverrippt. Die Querverrippung 14 verhindert ein schnelles Durchsickern von in die Wuchshülle eingedrungenem Wasser über die gesamte Höhe der Wuchshülle 1. Durch diese Maßnahme kann die Standzeit der Wuchshülle 1 verbessert werden.

Die Wuchshülle 1 weist weiterhin entlang einer Kante drei jeweils durch zwei Freischnitte 10 gebildete Freistellungen auf, wobei die Freischnitte 10 sich links- und rechtsseitig der Kante sowie im Wesentlichen quer zum Kantenverlauf bzw. der Führungslinie F erstrecken. Die so gebildeten Freischnitte sind jeweils "auf links gedreht" bzw. eingestülpt, so dass (von oben, in eine Ebene lotrecht zur Führungslinie betrachtet) drei übereinanderliegende hier quadratische Aufnahmen (Durchstecköffnungen) entstehen. Die quadratischen Aufnahmen können als Befestigungsmittel 9 zur Aufnahme einer Befestigungsstange dienen. Mittels einer Befestigungsstange kann die Wuchshülle im Erdreich verankert und damit gegen Verschiebung gesichert werden. Gleichzeitig verstärken die eingestülpten Freischnitte die Eigenformstabilität der Wuchshülle 1. Sie können daher auch als Versteifungsmittel 8 betrachtet werden. Die eingestülpten Wandelemente können dabei auch unabhängig vom Vorhandensein einer Befestigungsstange in der Aufnahme nur als Versteifungsmittel 8 dienen. Als Befestigungsstange kann beispielsweise ein unten angespitztes Kantholz oder ein Holzstab verwendet werden.

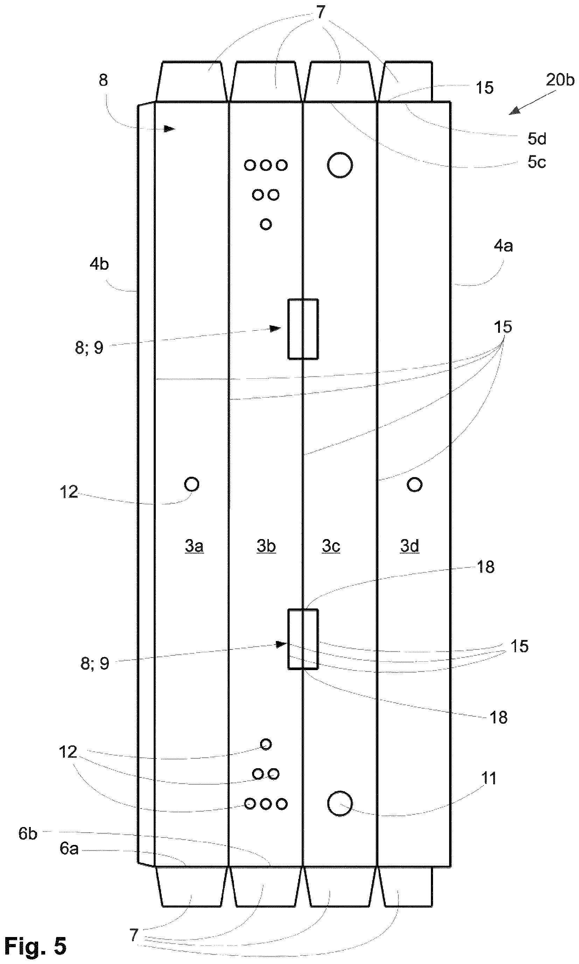

Möglich ist auch, die Freistellungen durch einfache, linienförmigen Einschnitte 18 anstelle eines flächigen Freischnitts 10 zu bilden, wie es bei Fig. 5 erläutert wird.

Die Wuchshülle gemäß Fig. 1 weist weiterhin drei kreisrunde Aussparungen 11 zur Tierflucht aus. Durch die Aussparungen 11 kann ein versehentlich in die Wuchshülle 1 geratenes Tier entkommen. Die größte Aussparung weist dabei einen Durchmesser von 30mm auf, so dass auch größere Tiere Ausflucht aus der Wuchshülle 1 finden. Auf weitere Aussparungen zur Verbesserung des Gasaustausches bzw. Dampfaustausches sowie zur Verbesserung des Lichteinfalls in das Innere der Wuchshülle 1 wurde verzichtet, da die Wuchshülle 1 aufgrund ihrer Materialeigenschaften ausreichend Gasaustausch und Lichtdurchlass für ein gesundes Pflanzenwachstum ermöglicht.

In Fig. 4 ist ein Rohling einer Wuchshülle des in den Fig. 1a und 1b gezeigten Ausführungsbeispiels gezeigt. Der Rohling ist dabei als zusammenhängender Wellpappen-Zuschnitt 20a ausgebildet. Der Wellpappen-Zuschnitt 20a kann in dieser Form an den Nutzer ausgeliefert und von diesem aufgestellt werden. Vor dem Aufstellen muss der Nutzer die Längskanten 4a und 4b miteinander verbinden, was beispielsweise mittels eines an einer Längskanten 4a oder 4b befindlichen Klebestreifens (mit abziehbarer Schutzfolie) bewerkstelligt werden kann. Auch andere Verbindungsmethoden wie z.B. Tackern sind möglich. Alternativ kann die Wuchshülle aber bereits im Auslieferungszustand an den Längskanten 4a, 4b miteinander verklebt sein und in gefaltetem Zustand an den Nutzer ausgeliefert werden. Für die noch nicht umgeschlagenen Umschlag-Enden 7 gilt Vergleichbares.

Die Wuchshülle 1 wird bei Ausbringung einer Anzucht, z.B. eines sich bereits in das Erdreich bzw. Boden B eingepflanzten Setzlings, über die Anzucht gestülpt. Dazu wird die Wuchshülle vor Montage, wenn sie sich in gefaltetem Zustand befindet, entfaltet bzw. raumgreifend aufgeklappt und Versteifungen und/oder Durchstecköffnungen ausgefaltet. Falzmarken 14 helfen bei der korrekten Faltung. Befestigungsstangen können dann durch erste Befestigungsmittel 9 der Wuchshülle mit der Wuchshülle verbunden werden. Befestigungsstangen werden dazu z.B. in den Boden B eingetrieben. Befestigungsstangen dienen dem Zweck, ein Umkippen oder Verschieben der Wuchshülle zu verhindern. Wenn mehrere Befestigungsstangen verwendet werden, können diese auch dem Aufhalten der Wuchshülle dienen, also verhindern, dass die Wuchshülle von einer raumgreifenden Form in eine im Wesentlichen flächige Anordnung zurückgeht.

Die Wuchshüllen können auch zweite Befestigungselemente 13 zum stoffschlüssigen Verbinden von Befestigungsstange und Wuchshülle 1 in Form von Kontaktklebe-Elementen umfassen. Die Kontaktklebe-Elemente können an geeigneten Stellen der Wuchshülle z.B. in Form von - im Auslieferungszustand mit einer Schutzfolie abgedeckten - Klebestreifens bereitgestellt sein. Durch eine stoffschlüssige Verbindung kann die Wuchshülle 1 somit gegen vertikales Verschieben (nach oben) gesichert werden bzw. sein. Ein entsprechendes Befestigungselement 13 ist im Wellpappenzuschnitt 20b in Fig. 5 angedeutet.

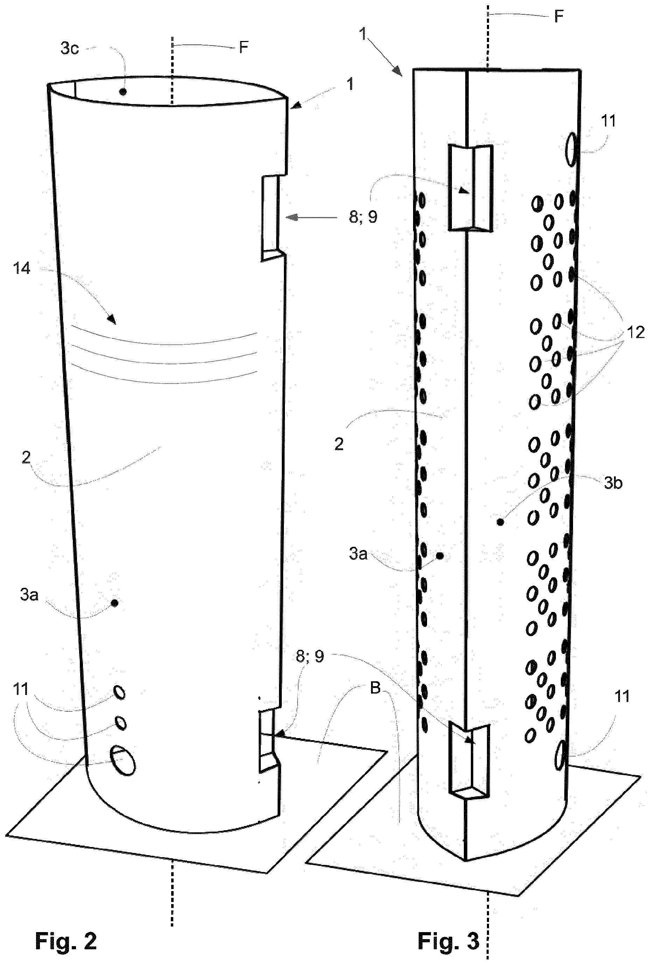

Fig. 2 zeigt ein zweites Ausführungsbeispiel einer erfindungsgemäßen Wuchshülle 1, wobei in diesem wie den nachfolgenden Ausführungsbeispielen jeweils nur auf Unterschiede eingegangen wird. Gleiche Bezugszeichen werden für gleiche bzw. vergleichbare Merkmale verwendet, so dass diesbezüglich auf die Ausführungen in den anderen Ausführungsbeispielen verwiesen wird.

Die Wuchshülle 1 gemäß Fig. 2 zeigt eine dem ersten Ausführungsbeispiel vergleichbare, aus einem Wellpappenzuschnitt gefertigte Wuchshülle, wobei im Gegensatz zum ersten Ausführungsbeispiel die Wuchshülle einen spitz-elliptischen bzw. bikonvexen Grundschnitt aufweist. Der Hüllkörper 2 weist dabei eine erste halbrunde Außenseite 3c und eine zweite halbrunde Außenseite 3d auf sowie eine erste halbrunde Innenseite 3a und eine zweite halbrunde Innenseite 3b, wobei jeweils eine Außenseite eine Innenseite im Wesentlichen überdeckt. Die Wuchshülle ist somit zwei-lagig ausgebildet, d.h. sie besteht aus zwei übereinanderliegenden Wellpapp-Schichten. Aufgrund der Zweilagigkeit ist für diese Ausführungsform bevorzugt einseitig gedeckte Wellpappe mit nur einer Deck- und einer Wellschicht vorgesehen. Für die Wellpappe kann dabei besonders dünnes Transparent-Papier verwendet werden, wie z.B. jeweils ein Transparent-Papier mit 50g/m² für Well- und Deckschicht. Dies ermöglicht einen guten Kompromiss zwischen Lichtdurchlässigkeit und Festigkeit der Wuchshülle.

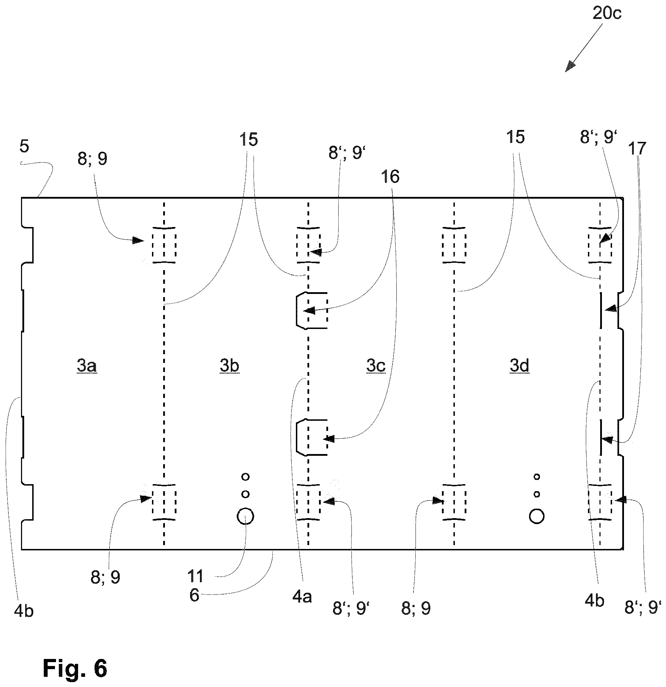

Die Wuchshülle ist analog Ausführungsbeispiel 1 aus einem Wellpappen-zuschnitt 20 c, vgl. Fig. 6, gefertigt. Zur Herstellung der Wuchshülle 1 wird der Wellpappenzuschnitt 20c dabei in einem ersten Schritt hälftig gefaltet, so dass Seitenflächen 3a und 3c sowie 3b und 3d in Anlage kommen und erst in einem zweiten Schritt zu einer geschlossenen Kontur gebogen. An den Längskanten 4a und 4b wird der Wellpappenzuschnitt 20c im Gegensatz zum ersten Ausführungsbeispiel hier formschlüssig über eine Laschenverbindung miteinander verbunden. Dazu sind im Wellpappenzuschnitt 20c Laschen 16 und Einschnitte 17 zur Aufnahme der Laschen 16 eingebracht. Neben den übereinanderliegenden Wellpappenschichten sind auch die Versteifungsmittel 8 bzw. erste Befestigungsmittel 9 zweilagig ausgebildet. Dies verleiht der Wuchshülle eine hohe Formstabilität. Die Wuchshülle weist mit der spitz-elliptischen Querschnitt zwei Kanten auf, wobei im Gegensatz zum ersten Ausführungsbeispiel an jeder Kante jeweils zwei Versteifungsmittel bzw. jeweils zwei erste Befestigungsmittel 8,9 bzw. 8', 9' vorgesehen sind.

Fig. 3 zeigt eine Abwandlung des zweiten Ausführungsbeispiels, wobei im Unterschied hierzu zusätzlich näherungsweise vollflächig Aussparungen 12 zur Belüftung vorhanden sind. Eine demgemäße Ausführung ist besonders vorteilhaft für konstanten Luftzug liebende Pflanzen. Außerdem können Triebe durch die Aussparungen 12 seitlich aus der Hülle herauswachsen.

In Fig. 5 ist eine Abwandlung des ersten Ausführungsbeispiels bzw. des Wellpappenzuschnitts 20a nach Fig. 4 gezeigt. Im Gegensatz zum ersten Ausführungsbeispiel sind im Wellpappenzuschnitt 20b anstelle der Freischnitte 10 einfache Einschnitte 18 zur Bereitstellung der Versteifungs- bzw. Befestigungsmittel 8, 9 vorgesehen. Der Wellpappenzuschnitts 20a ist außerdem spiegelsymmetrisch ausgeführt und weist sowohl an seiner Ober- als auch an seiner Unterseite jeweils Aussparungen 11 zur Tierflucht sowie zusätzlich Aussparungen 10 zur Belüftung auf. Durch die Spiegelsymmetrie wird ein korrektes Aufstellen der Wuchshülle (insbesondere mit Aussparungen zur Tierflucht am Boden) unterstützt.

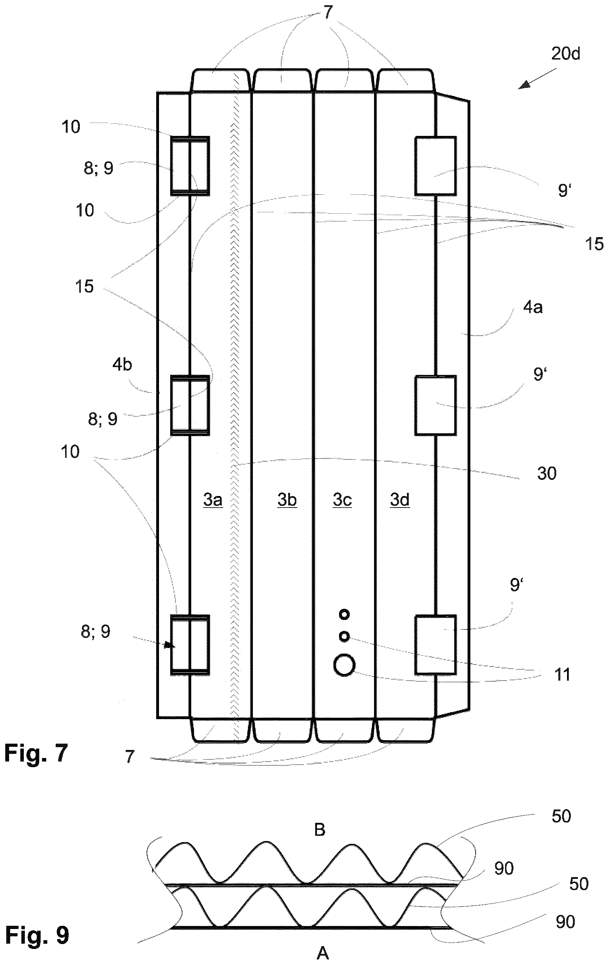

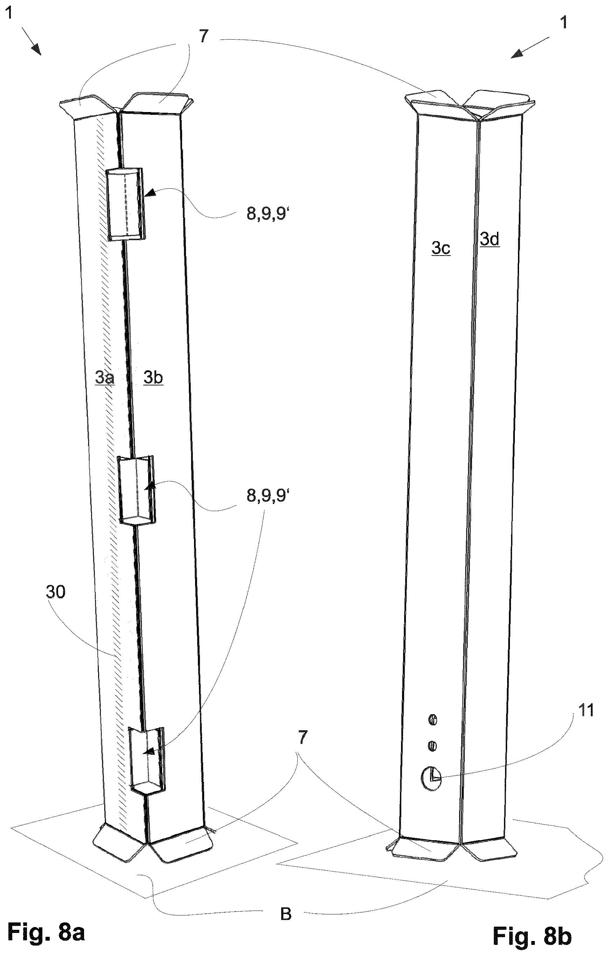

Die Figuren 7 und 8 zeigen eine Wuchshülle 1 bzw. einen Zuschnitt 20d hierfür nach einer vierten, im Querschnitt rechteckigen, Ausführungsform. Im Unterschied zu den vorhergehenden Ausführungsbeispielen ist die Verbindung der endseitigen Längskanten bzw. -flächen 4a, 4b der Wuchshülle hier redundant ausgeführt: Einerseits sind die Längsflächen 4a, 4b mit korrespondierenden Seitenflächen 3a zw. 3d miteinander verklebt bzw. verklebbar, und andererseits greifen im aufgestellten Zustand die nach innen eingestülpten Befestigungsmittel 9, insbesondere Laschen, in gegengleiche Fenster bzw. Ausschnitte 9' formschlüssig ein, so dass die Wuchshülle auch bei Versagen der Verklebung der Längsflächen 4a, 4b eigenstabil bleibt.

Weiterhin weist die Wuchshülle an einer der Seitenflächen 3, hier der Seitenfläche 3b, eine Sollbruchstelle in Form einer perforierten Aufreißlasche 30 auf. Dadurch kann die Wuchshülle nach einer bestimmungsgemäßen Aufstellzeit unkompliziert eingeholt werden, indem die Wuchshülle an der Aufreißlasche 30 aufgetrennt wird und von der Pflanze entfernt wird, um welche die Wuchshülle zu deren Schutz angeordnet war. Die Wuchshülle kann dann in einem herkömmlichen Papier-Recyclingverfahren recycelt werden.

Einen weiteren Vorteil bietet die alternative Nutzung von Endlaschen 7 des Zuschnitts 20d, die in Figur 8 gezeigt ist. Die Endlaschen 7 werden im Vergleich zum ersten Ausführungsbeispiel nicht umgeschlagen und mit den entsprechenden Seitenflächen 3a-d verklebt, sondern bleiben freistehend. Wie aus den Fig. 8a und 8b entnehmbar, wird die Wuchshülle 1 so ausgebracht, dass die Endlaschen 7 an der Ober- und Unterkante der Wuchshülle nach außen geklappt werden. Die dem Boden B zugewandten Endlaschen 7 bilden eine zusätzliche Aufstandsfläche, welche die Standfestigkeit der Wuchshülle erhöht, zugleich aber auch unerwünschtes Unkrautwachstum unter der Aufstandsfläche unterdrückt. Die Endlaschen 7 der Oberkante sind trichterartig nach außen gestülpt und können die der Pflanze zugeführte Wassermenge bei Niederschlag erhöhen. Außerdem verringern die Endlaschen eine Verletzungsgefahr der Pflanze beim Aufstellen der Wuchshülle, da die Wuchshülle keine scharfkantigen Enden aufweist.

Fig. 9 zeigt einen besonders vorteilhaften Aufbau einer Wellpappe einer erfindungsgemäßen Wuchshülle im Querschnitt, die für die Ausführungsbeispiele der erfindungsgemäßen Wuchshülle verwendet werden kann. Die Wellpappe ist zweiwellig mit einer ersten und einer zweiten Wellschicht 50 mit hier jeweils einer Grammatur von 50g/m² und einer ersten und zweiten Deckschicht 90 mit jeweils einer Grammatur von 90g/m² ausgeführt. Die Well- und Deckschichten 50 bzw. 90 sind aus Transparentpapier gefertigt und weisen damit eine Lichtdurchlässigkeit (Transluzenz) auf. Die einzelnen Papierschichten sind mittels über Zuschlagsstoffe nassfest ausgeführten Kaschierklebstoff auf Stärkebasis miteinander verbunden.

Die im ausgebrachten Zustand außenliegende Seite A (Wetterseite) der Wellpappe ist zweckmäßig zusätzlich außenseitig hydrophobiert, bspw. mit einer wasserabweisenden Schutzschicht überzogen. Dies beugt einer schnellen Verrottung der Wuchshülle vor, ohne dabei jedoch die nach bestimmungsgemäßer Standzeit gewünschte Verrottung zu sehr zu verlängern.

Die hier dargestellte Erfindung bietet eine umweltfreundliche Alternative zu Wuchshüllen aus nicht-biologischen oder nicht recyclingfähigen Rohstoffen, wie z.B. Kunststoffen.

### Bezugszeichenliste:

- A: Außenseite (Wetterseite)
- B: Boden
- F: Führungslinie
- I: Innenseite

- 1: Wuchshülle
- 2: Hüllkörper
- 3(a-d): Seitenfläche
- 4(a-b): endseitige Längskante bzw. -fläche
- 5(a-d): End/ Begrenzungsflächen (oben)
- 6(a-d): End/ Begrenzungsflächen (unten)
- 7: Umschlag-Enden bzw. Endlaschen
- 8: Versteifungsmittel
- 9: erste Befestigungsmittel (Befestigungsstange)
- 9': Fenster (zur formschlüssigen Aufnahme der ersten Befestigungsmittel)

- 10: Freischnitt
- 11: Aussparung (Tierflucht)
- 12: Aussparung (Belüftung)
- 13: zweite Befestigungsmittel (Kontakt-Klebeelemente)
- 14: Querverrippung
- 15: Falz-Marken
- 16: Lasche
- 17: Einschnitt (Laschen)
- 18: Einschnitt (erste Befestigungselemente)
- 20(a-d): Zuschnitt (Wellpappe)
- 30: Aufreißlasche bzw. Perforation
- 50: Deckschicht
- 90: Wellschicht

## Patentansprüche

1. Umweltverträgliche Wuchshülle (1) für Pflanzen mit einem zweiseitig offenen, entlang einer Führungslinie (F) sich erstreckenden Hüllkörper (2), insbesondere in Form eines Zylinders, **dadurch gekennzeichnet, dass** der Hüllkörper (2) aus transluzenter Wellpappe gefertigt ist.

2. Wuchshülle (1) nach Anspruch 1 **dadurch gekennzeichnet, dass** der Hüllkörper (2) aus einseitig oder zweiseitig gedeckter, ein- oder mehrlagiger Wellpappe aus verklebtem Transparentpapier gefertigt ist.

3. Wuchshülle (1) nach Anspruch 1 oder 2 **dadurch gekennzeichnet, dass** die Wuchshülle (1) einteilig aus einem den Hüllkörper bildenden Zuschnitt (20) gefertigt ist, dessen Längskanten (4) miteinander verbunden, insbesondere verklebt, sind.

4. Wuchshülle (1) nach einem der voranstehenden Ansprüche, **dadurch gekennzeichnet, dass** der Hüllkörper (2) eine Hüllfläche mit einer Lichtdurchlässigkeit von mindestens 35% im Spektralbereich von 450-500nm und/oder mit einer Lichtdurchlässigkeit von mindestens 35% im Spektralbereich von 600-650nm aufweist.

5. Wuchshülle (1) nach einem der Ansprüche 2 bis 4 **dadurch gekennzeichnet, dass** mindestens ein Transparentpapier der Wellpappe eine Wasseraufnahmefähigkeit von COBB 60s kleiner als 30 g/m² hat.

6. Wuchshülle (1) nach einem der Ansprüche 2 bis 5 **dadurch gekennzeichnet, dass** mindestens ein Transparentpapier der Wellpappe eine Wasseraufnahmefähigkeit von COBB 1800s von 50 bis 400 g/m² aufweist.

7. Wuchshülle (1) nach einem der voranstehenden Ansprüche, **dadurch gekennzeichnet, dass** der Hüllkörper (2) zumindest im Wesentlichen gasdurchlässig, insbesondere mit einer Wasserdampfdurchlässigkeit von mindestens 350g pro m² und Tag, ausgebildet ist.

8. Wuchshülle (1) nach einem der Ansprüche 2 bis 7, **dadurch gekennzeichnet, dass** das mindestens ein Transparentpapier der Wellpappe beschichtet ist, insbesondere mit einem Lack, und/oder dass mindestens ein Transparentpapier hydrophobiert ist.

9. Wuchshülle (1) nach einem der voranstehenden Ansprüche, **dadurch gekennzeichnet, dass** der Hüllkörper (2) als Einstülpungen der Wand ausgeführte erste Befestigungsmittel (9) in Form von Durchstecköffnungen zur Aufnahme von Befestigungsstangen aufweist.

10. Wuchshülle (1) nach den Ansprüchen 3 und 9, **dadurch gekennzeichnet, dass** an einer Seite des Zuschnitts befindliche Durchstecköffnungen (9) formschlüssig in gegenüberliegende Fenster (9') des Zuschnitts eingreifen.

11. Wuchshülle (1) nach einem der voranstehenden Ansprüche, **dadurch gekennzeichnet, dass** die Wuchshülle (1) Aussparungen zur Tierflucht (11) und/oder Belüftung (12) aufweist, wobei die Summe der Fläche aller Aussparungen (11, 12) nicht mehr als 10% der Mantelfläche einnimmt.

12. Wuchshülle (1) nach einem der voranstehenden Ansprüche, **dadurch gekennzeichnet, dass** die Wellpappe eine im Wesentlichen quer zur Führungslinie verlaufende Verrippung (14) aufweist.

13. Wuchshülle (1) nach einem der Ansprüche 3 bis 12, **dadurch gekennzeichnet, dass** die Wuchshülle (1) eine erste Klebstoffart und eine zweite Klebstoffart enthält.

14. Wuchshülle (1) nach einem der voranstehenden Ansprüche, **dadurch gekennzeichnet, dass** die Wuchshülle (1) eine zweilagig und einseitig gedeckte Wellpappe umfassend eine erste äußere Deckschicht (90), eine Wellschicht (50), eine zweite Deckschicht (90) und eine zweite, innere Wellschicht (50) aufweist.

15. Zuschnitt (20) einer Wellpappe zur Herstellung einer Wuchshülle (1) nach einem der vorhergehenden Ansprüche.

## Claims

1. Environmentally compatible growing envelope (1) for plants with an enveloping body (2) open on two sides and extending along a guide line (F), in particular in the form of a cylinder, **characterised in that** the enveloping body (2) is made of translucent corrugated cardboard.

2. Growing envelope (1) according to claim 1, **characterised in that** the envelope body (2) is made of one-sided or two-sided covered, single or multi-layer corrugated cardboard made of glued transparent paper.

3. Growing envelope (1) according to claim 1 or 2, **characterised in that** the growing envelope (1) is manufactured in one piece from a blank (20) forming the envelope body, the longitudinal edges (4) of which are joined together, in particular glued.

4. Growing envelope (1) according to one of the preceding claims, **characterised in that** the envelope body (2) has an enveloping surface with a light transmittance of at least 35% in the spectral range of 450-500 nm and/or with a light transmittance of at least 35% in the spectral range of 600-650 nm.

5. Growing envelope (1) according to one of claims 2 to 4, **characterised in that** at least one transparent paper of the corrugated cardboard has a water absorption capacity of COBB 60s of less than 30 g/m²

6. Growing envelope (1) according to one of claims 2 to 5, **characterised in that** at least one transparent paper of the corrugated cardboard has a water absorption capacity of COBB 1800s of 50 to 400 g/m².

7. Growing envelope (1) according to one of the preceding claims, **characterised in that** the envelope body (2) is at least substantially gas-permeable, in particular with a water vapour permeability of at least 350g per m² and day.

8. Growing envelope (1) according to one of claims 2 to 7, **characterised in that** the at least one transparent paper of the corrugated cardboard is coated, in particular with a lacquer, and/or **in that** at least one transparent paper is hydrophobic.

9. Growing envelope (1) according to one of the preceding claims, **characterised in that** the envelope body (2) has first fastening means (9) in the form of push-through openings designed as recesses of the wall for receiving fastening rods.

10. Growing envelope (1) according to claims 3 and 9, **characterised in that** push-through openings (9) located on one side of the blank form-fittingly engage in opposite windows (9') of the blank.

11. Growing envelope (1) according to one of the preceding claims, **characterised in that** the growing envelope (1) has cut-outs for animal escape (11) and/or ventilation (12), wherein the sum of the area of all cut-outs (11, 12) is occupying no more than 10% of the surface area of the envelope.

12. Growing envelope (1) according to one of the preceding claims, **characterised in that** the corrugated cardboard has a ribbing (14) running essentially transversely to the guide line.

13. Growing envelope (1) according to one of claims 3 to 12, **characterised in that** the growing envelope (1) contains a first type of adhesive and a second type of adhesive.

14. Growing envelope (1) according to one of the preceding claims, **characterised in that** the growing envelope (1) has a two-layer corrugated cardboard which is covered on one side and comprises a first outer cover layer (90), a corrugated layer (50), a second cover layer (90) and a second, inner corrugated layer (50).

15. Blank (20) of corrugated cardboard for producing a growing envelope (1) according to one of the preceding claims.

## Revendications

1. Enveloppe de culture (1) non polluante pour des plantes avec un corps d'enveloppe (2) ouvert des deux côtés, s'étendant le long d'une ligne de guidage (F), en particulier sous forme d'un cylindre, **caractérisée en ce que** le corps d'enveloppe (2) est fabriqué à partir de carton ondulé translucide.

2. Enveloppe de culture (1) selon la revendication 1 **caractérisée en ce que** le corps d'enveloppe (2) est fabriqué à partir de carton ondulé monocouche ou multicouche en papier transparent collé recouvert sur un côté ou les deux côtés.

3. Enveloppe de culture (1) selon la revendication 1 ou 2 **caractérisée en ce que** l'enveloppe de culture (1) est fabriquée d'une seule pièce à partir d'une découpe (20) formant le corps d'enveloppe, dont les bords longitudinaux (4) sont reliés les uns aux autres, en particulier collés.

4. Enveloppe de culture (1) selon l'une quelconque des revendications précédentes, **caractérisée en ce que** le corps d'enveloppe (2) présente une surface d'enveloppe avec une perméabilité à la lumière d'au moins 35 % dans le domaine spectral de 450-500 nm et/ou avec une perméabilité à la lumière d'au moins 35 % dans le domaine spectral de 600-650 nm.

5. Enveloppe de culture (1) selon l'une quelconque des revendications 2 à 4 **caractérisée en ce qu'**au moins un papier transparent du carton ondulé a une capacité d'absorption d'eau de COBB 60s inférieure à 30 g/m².

6. Enveloppe de culture (1) selon l'une quelconque des revendications 2 à 5 **caractérisée en ce qu'**au moins un papier transparent du carton ondulé présente une capacité d'absorption d'eau de COBB 1800s de 50 à 400 g/m².

7. Enveloppe de culture (1) selon l'une quelconque des revendications précédentes, **caractérisée en ce que** le corps d'enveloppe (2) est réalisé au moins sensiblement de manière perméable au gaz, en particulier avec une perméabilité à la vapeur d'eau d'au moins 350 g par m² et jour.

8. Enveloppe de culture (1) selon l'une quelconque des revendications 2 à 7, **caractérisée en ce que** l'au moins un papier transparent du carton ondulé est revêtu, en particulier d'un vernis, et/ou qu'au moins un papier transparent est rendu hydrophobe.

9. Enveloppe de culture (1) selon l'une quelconque des revendications précédentes, **caractérisée en ce que** le corps d'enveloppe (2) présente des premiers moyens de fixation (9) conçus comme des retroussements de la paroi sous forme d'ouvertures de passage pour la réception de tiges de fixation.

10. Enveloppe de culture (1) selon les revendications 3 et 9, **caractérisée en ce que** des ouvertures de passage (9) se trouvant sur une face de la découpe s'insèrent par coopération de formes dans des fenêtres (9') opposées de la découpe.

11. Enveloppe de culture (1) selon l'une quelconque des revendications précédentes, **caractérisée en ce que** l'enveloppe de culture (1) présente des évidements pour faire fuir des animaux (11) et/ou l'aération (12), dans laquelle la somme de la surface de tous les évidements (11, 12) n'occupe pas plus de 10 % de la surface d'enveloppe.

12. Enveloppe de culture (1) selon l'une quelconque des revendications précédentes, **caractérisée en ce que** le carton ondulé présente un nervurage (14) s'étendant sensiblement transversalement par rapport à la ligne de guidage.

13. Enveloppe de culture (1) selon l'une quelconque des revendications 3 à 12, **caractérisée en ce que** l'enveloppe de culture (1) contient un premier type d'adhésif et un deuxième type d'adhésif.

14. Enveloppe de culture (1) selon l'une quelconque des revendications précédentes, **caractérisée en ce que** l'enveloppe de culture (1) est constituée d'un carton ondulé à deux couches, recouvert d'un côté et comprenant une première couche de recouvrement (90) extérieure, une couche ondulée (50), une deuxième couche de recouvrement (90) et une deuxième couche ondulée (50) intérieure.

15. Découpe (20) d'un carton ondulé pour la production d'une enveloppe de culture (1) selon l'une quelconque des revendications précédentes.
